# EUROPEAN PATENT SPECIFICATION

(11) **EP 3 906 802 B1**
(45) Date of publication and mention of the grant of the patent: **25.10.2023**
(21) Application number: 21172607.0
(22) Date of filing: 06.05.2021
(51) Int. Cl.: A44B 11/25, B60R 22/18

(54) **BUCKLE TONGUE WITH BLOCKING ELEMENT**
SCHNALLENZUNGE MIT SPERRELEMENT
LANGUETTE DE BOUCLE COMPORTANT UN ÉLÉMENT DE BLOCAGE

(30) Priority: 06.05.2020 DE 102020112406
(43) Date of publication of application: 10.11.2021
(73) Proprietor: Autoliv Development AB, 447 83 Vårgårda (SE)
(72) Inventor: HERMANN, Michel, 25421 Pinneberg (DE); GRIKSCHAT, Martin, 25524 Breitenburg (DE); URBANO, Inga, 25336 Elmshorn (DE)
(74) Representative: Feucker, Max Martin

(56) References cited:
- DE-A1-102013 216 326
- DE-B4-102016 106 438
- US-A1- 2013 341 994

## Description

The present invention relates to a buckle tongue comprising a tongue body, wherein the tongue body extends in an insertion direction, forms a belt slot that extends transversely to the insertion direction and is provided for guiding a belt strap through it, and has a contact section, wherein the belt strap rests against the contact section at least in a load position, and wherein the contact section has several recesses, which in the load position minimize the belt strap slipping transversely to the insertion direction or preferably even completely prevent it from doing so, and with a blocking element that is movably arranged in the tongue body, wherein in an unloaded pass-through position of the blocking element, the belt strap can be moved through the belt slot, and in the load position brought about by a tensile force introduced into the belt strap, the movability of the belt strap is at least inhibited by means of the blocking element.

A buckle tongue according to the preamble of claim 1 is known from DE 10 2013 216 326 A1, wherein the tongue body has depressions that are oriented in the longitudinal direction of the belt strap and against which the belt strap already rests in the pass-through position. In particular if the recesses are formed as cross grooves or the surface having the recesses also has a high coefficient of friction in the longitudinal direction of the belt strap, the tongue body can negatively counteract a simple movement of the buckle tongue along the belt strap in the pass-through position.

The object of the present invention is therefore to eliminate the disadvantages described with reference to the prior art and in particular to specify a buckle tongue that can be moved along the belt strap in a simple manner, i.e., without much resistance, in the pass-through position, whereas in the load position and in particular before a complete clamping of the belt strap is reached, a the belt strap is not movable transversely to the insertion direction along the tongue body.

The object is achieved by a buckle tongue with the features of the independent claim. Advantageous developments of the buckle tongue are specified in the dependent claims, wherein individual features of the advantageous developments can be combined with one another as desired in a technically sensible manner, within the scope of the claims.

The object is achieved in particular by a buckle tongue having the features mentioned according claim 1 and with which the blocking element is arranged in the pass-through position between the belt strap and the contact section having the recesses, so that the belt strap does not rest against the recesses in the pass-through position.

The basic idea of the invention thus provides that the belt strap is spaced from the recesses by the blocking element in the pass-through position of the blocking element, whereas after a deflection of the blocking element from the pass-through position in the direction of the load position and at the latest shortly before reaching the maximum load position, the belt strap comes into contact with the recesses and in particular is drawn into them. The interaction between the belt strap loaded with a relatively high tensile force and the recesses prevents the belt strap from slipping transversely to the insertion direction along the tongue body. Such slipping of the belt strap in the belt slot transversely to the insertion direction is also referred to as "bunching." Thus, several (at least two), preferably at least three or even at least four, recesses that are arranged next to one another, into which the belt strap is drawn in the load position, are provided in the contact section.

The tongue body consists, for example, of a metal tongue plate and of a plastic cover partially surrounding the tongue plate, in particular in the region of the belt slot, wherein the cover has the recesses in a preferred embodiment.

The blocking element can, for example, be mounted so as to be linearly movable (displaceable) in/on the tongue body. However, it is preferred that the blocking element is mounted pivotably in/on the tongue body. Thereby, the blocking element is pivoted from the pass-through position into the load position by the belt strap.

In the buckled state, the end tongue deflects the belt strap in a loop-like manner, so that the belt strap is divided into a shoulder belt section and a lap belt section. In the case of a load, this section of the belt strap deflected in a loop-like manner acts with a tensile force from the shoulder belt section and/or from the lap belt section onto the blocking element and transfers it from the pass-through position into the load position.

The blocking element has, in particular, a clamping section and an actuating section, wherein the belt strap transfers the blocking element from the pass-through position into the load position by acting on the actuating section, and wherein the belt strap is clamped in the load position between the tongue body and the clamping section of the blocking element. The clamping section and the actuating section are in particular integrally formed on a common component. In the pass-through position, the clamping section is spaced from a pressing section formed by a surface section of the tongue body, such that the belt strap guided through between the clamping section and the pressing section is freely movable in the pass-through position. When the blocking element is deflected by the belt strap acting on the actuating section, the clamping section moves toward the pressing section of the tongue body and finally presses the belt strap arranged therebetween onto the pressing section.

In order to prevent the belt strap from already resting against the recesses of the contact section in the pass-through position, it is provided in one embodiment that the actuating section of the blocking element is arranged between the belt strap and the contact section. In particular when the blocking element is pivotably mounted in/on the tongue body, a recess is formed between the clamping section and the actuating section of the blocking element, wherein the blocking element in the load position assumes such a position that the tongue body is arranged in this recess between the clamping section and the actuating section in the load position, so that the contact section having the recess extends through the blocking element.

The recesses are in particular arranged in such a way that they delimit the belt slot. The recesses that delimit the belt slot are thus arranged in such a section (for example on an edge or surface) of the tongue body. The depths of the depressions formed by the recesses thus extend in the insertion direction, while the recesses do not have any substantial extent in the longitudinal direction of the belt strap, i.e., transversely to the belt slot. The regions of the contact section between the recesses thus together form a plurality of tooth-shaped projections. In this way, the recesses are arranged at a point at which particularly large tensile forces draw the belt strap into the recesses. The belt strap is thus prevented particularly effectively from slipping transversely to the insertion direction. Thus, in particular, several recesses arranged next to one another can be utilized at a section of the tongue body extending through the blocking element, wherein the recesses directly delimit the belt slot without the spacing of the belt strap having to be utilized by the blocking element in the pass-through position.

The invention and the technical environment are explained below by way of example with reference to the figures. The following are shown schematically:
Figure 1: a tongue body of a buckle tongue,
Figure 2: the buckle tongue according to Figure 1 with a movably mounted blocking element in a pass-through position,
Figure 3: the buckle tongue according to Figure 2 with the blocking element in a load position, and
Figure 4: the buckle tongue in the load position with a belt strap.

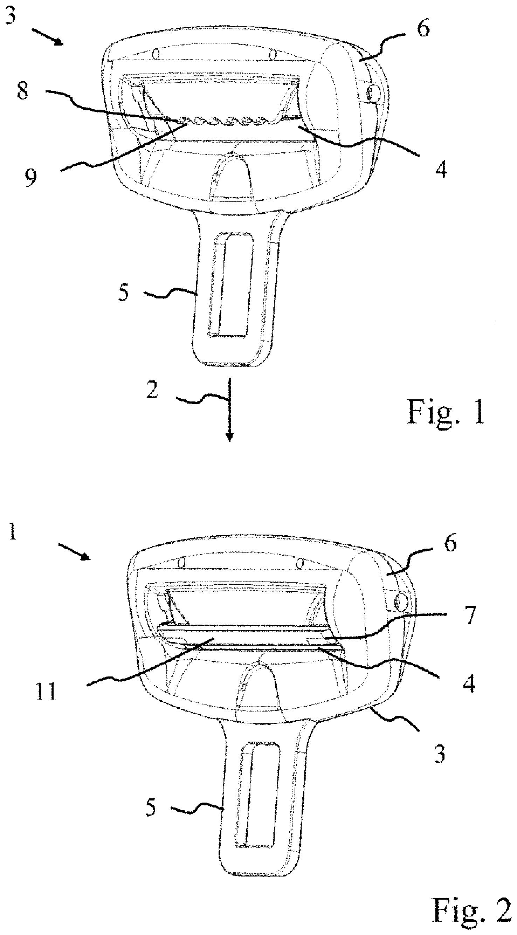

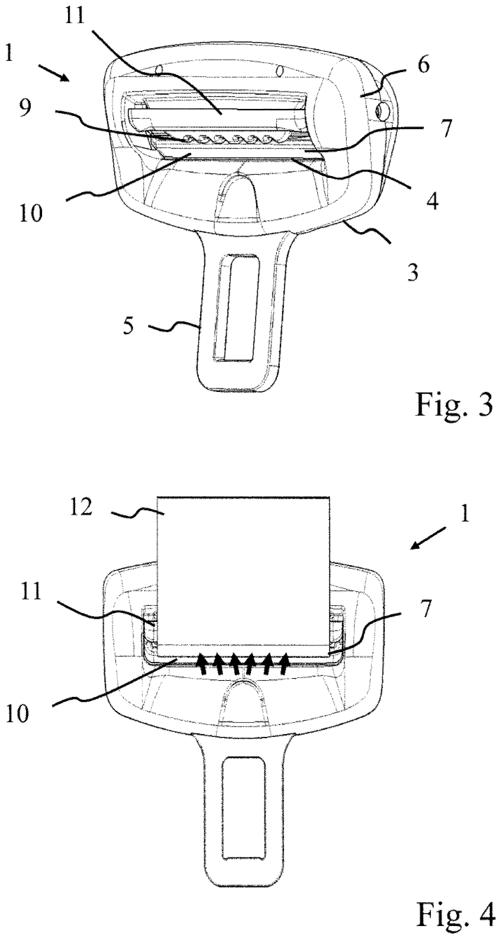

Figure 1 shows a tongue body 3 of a buckle tongue 1 shown in Figures 2 to 4. The tongue body 3 comprises a metal tongue plate 5 and a plastic cover 6 partially surrounding the tongue plate 5. The tongue body 3 extends in an insertion direction 2 and has a belt slot 4. The belt slot 4 extends transversely to the insertion direction 2 and is provided for receiving a belt strap 12 shown in Figure 4.

The cover 6 forms a contact section 8 that delimits the belt slot 4 and has several recesses 9.

The buckle tongue 1 also comprises a blocking element 7 that is shown in Figure 2 in its pass-through position and in Figure 3 in its load position. The integrally formed blocking element 7 has a clamping section 10 and an actuating section 11. A recess is formed between the clamping section 10 and the actuating section 11.

As can be seen from Figure 2, the actuating section 11 is arranged in the pass-through position such that the belt strap 12 (not shown in Figure 2) does not come into contact with the recesses 9 of the contact section 8. In the pass-through position, the belt strap 12 can, however, be guided freely movably through the belt slot 4.

When a tensile force is introduced into the belt strap, the belt strap 12 acts on the actuating section 11 of the blocking element 7, whereby the blocking element 7 is pivoted into the load position. In the load position, the belt strap 12 is pressed by the clamping section 10 of the blocking element 7 onto a pressing section of the tongue body 3, whereby the mobility of the belt strap 12 is decreased or completely reduced. At the same time, the recesses 9 are released by the pivoting of the actuating section 11, wherein the belt strap 12 comes into contact with the contact section 8 and is drawn into the recesses 9 as indicated in Figure 4 by the arrows.

By the pivoting of the blocking element 7, the contact section 8 with the recesses 9 extends through the blocking element 11 so to speak, whereby the contact section 8 with the recesses 9 comes into contact with the belt strap 12. Since the recesses 9 delimit the belt slot 4 at least in the load position, the belt strap 12 with its section deflected in a loop-like manner acts on the recesses 9, so that the belt strap 12 is drawn into the recesses 9 with a high force. In their depths, the recesses 9 therefore extend in the insertion direction 2 and not substantially in the belt strap profile direction, so that the contact section 8 forms tooth-like projections between the recesses 9. Slipping of the belt strap 12 transversely to the insertion direction 2 is thus effectively avoided.

### List of reference signs

- 1: Buckle tongue
- 2: Insertion direction
- 3: Tongue body
- 4: Belt slot
- 5: Tongue plate
- 6: Cover
- 7: Blocking element
- 8: Contact section
- 9: Recess
- 10: Clamping section
- 11: Actuating section
- 12: Belt strap

## Claims

1. Buckle tongue (1) comprising
- a tongue body (3), wherein the tongue body (3)
• extends in an insertion direction (2),
• forms a belt slot (4) that extends transversely to the insertion direction (2) and is provided for guiding a belt strap through it, and
• has a contact section (8), wherein the belt strap (12) rests against the contact section (8) at least in a load position, wherein the contact section (8) has several recesses (9) that in the load position minimize slipping of the belt strap (12) transversely to the insertion direction (2), and
- a blocking element (7) movably arranged in the tongue body (3), wherein the belt strap (12) can be moved through the belt slot (4) in an unloaded pass-through position of the blocking element (7) and is at least inhibited in its mobility by means of the blocking element (7) in the load position brought about by a tensile force introduced into the belt strap (12),
**characterized in that**
in the pass-through position, the blocking element (7) is arranged between the belt strap (12) and the contact section (8) having the recesses (9), so that the belt strap (12) does not rest against the recesses (9) in the pass-through position.

2. Buckle tongue (1) according to claim 1, wherein the blocking element (7) has a clamping section (10) and an actuating section (11), wherein the belt strap (12) transfers the blocking element (7) from the pass-through position into the load position by acting on the actuating section (11) and the belt strap (12) is blocked between the tongue body (3) and the clamping section (10) in the load position.

3. Buckle tongue (1) according to claim 2, wherein in the pass-through position, the actuating section (11) is arranged between the belt strap (12) and the contact section (8).

4. Buckle tongue (1) according to claim 3, wherein the part of the tongue body (3) forming the contact section (8) extends through the blocking element (7) between the clamping section (10) and the actuating section (11) in the load position.

5. Buckle tongue (1) according to one of the preceding claims, **characterized in that** the recesses (9) delimit the belt slot (4).

6. Buckle tongue (1) according to one of the preceding claims, wherein the contact section (8) has at least three recesses (9) that are arranged next to one another and into which the belt strap (12) is drawn in the load position.

7. Buckle tongue (1) according to one of the preceding claims, wherein the tongue body (3) has a metal tongue plate (5) and a plastic cover (6) that partially surrounds the tongue plate (5), wherein the cover (6) has the recesses (9).

8. Buckle tongue (1) according to one of the preceding claims, wherein the blocking element (7) is arranged in the tongue body (3) so as to be pivotable or linearly movable.

9. Buckle tongue (1) according to one of the preceding claims, wherein in the buckled state, the belt strap (12) is deflected by the buckle tongue (1) in a loop-like manner.

## Patentansprüche

1. Schlosszunge (1), umfassend
- einen Zungenkörper (3), wobei der Zungenkörper (3)
• sich in einer Einführungsrichtung (2) erstreckt,
• einen Gurtschlitz (4) ausbildet, der sich zu der Einführungsrichtung (2) quer erstreckt und der zum Führen eines Gurtbandes durch ihn bereitgestellt ist, und
• einen Kontaktabschnitt (8) aufweist, wobei das Gurtband (12) mindestens in einer Belastungsposition an dem Kontaktabschnitt (8) anliegt, wobei der Kontaktabschnitt (8) mehrere Aussparungen (9) aufweist, die in der Belastungsposition ein Verrutschen des Gurtbandes (12) quer zu der Einführungsrichtung (2) minimieren, und
- ein Blockierelement (7), das in dem Zungenkörper (3) bewegbar angeordnet ist, wobei das Gurtband (12) durch den Gurtschlitz (4) in einer unbelasteten Durchgangsposition des Blockierelements (7) bewegt werden kann und mittels des Blockierelements (7) in der Belastungsposition, die durch eine in das Gurtband (12) eingeleitete Zugkraft bewirkt wird, mindestens in seiner Beweglichkeit gehemmt wird,
**dadurch gekennzeichnet ist, dass**
das Blockierelement (7) in der Durchgangsposition zwischen dem Gurtband (12) und dem Kontaktabschnitt (8), der Aussparungen (9) aufweist, angeordnet ist, so dass das Gurtband (12) in der Durchgangsposition nicht an den Aussparungen (9) anliegt.

2. Schlosszunge (1) nach Anspruch 1, wobei das Blockierelement (7) einen Klemmabschnitt (10) und einen Betätigungsabschnitt (11) aufweist, wobei das Gurtband (12) das Blockierelement (7) durch ein Wirken auf den Betätigungsabschnitt (11) von der Durchgangsposition in die Belastungsposition überführt und das Gurtband (12) zwischen dem Zungenkörper (3) und dem Klemmabschnitt (10) in der Belastungsposition blockiert ist.

3. Schlosszunge (1) nach Anspruch 2, wobei der Betätigungsabschnitt (11) in der Durchgangsposition zwischen dem Gurtband (12) und dem Kontaktabschnitt (8) angeordnet ist.

4. Schlosszunge (1) nach Anspruch 3, wobei sich der Teil des Zungenkörpers (3), der den Kontaktabschnitt (8) ausbildet, durch das Blockierelement (7) zwischen dem Klemmabschnitt (10) und dem Betätigungsabschnitt (11) in der Belastungsposition erstreckt.

5. Schlosszunge (1) nach einem der vorstehenden Ansprüche,
**dadurch gekennzeichnet, dass** die Aussparungen (9) den Gurtschlitz (4) begrenzen.

6. Schlosszunge (1) nach einem der vorstehenden Ansprüche, wobei der Kontaktabschnitt (8) mindestens drei Aussparungen (9), die nebeneinander angeordnet sind, aufweist und in die das Gurtband (12) in der Belastungsposition gezogen ist.

7. Schlosszunge (1) nach einem der vorstehenden Ansprüche, wobei der Zungenkörper (3) eine Metallzungenplatte (5) und eine Kunststoffabdeckung (6), die die Zungenplatte (5) teilweise umgibt, aufweist, wobei die Abdeckung (6) die Aussparungen (9) aufweist.

8. Schlosszunge (1) nach einem der vorstehenden Ansprüche, wobei das Blockierelement (7) in dem Zungenkörper (3) angeordnet ist, um schwenkbar oder linear bewegbar zu sein.

9. Schlosszunge (1) nach einem der vorstehenden Ansprüche, wobei das Gurtband (12) in dem verschlossenen Zustand durch die Schlosszunge (1) in einer schlaufenartigen Weise eingefedert wird.

## Revendications

1. Languette de boucle (1) comprenant
- un corps de languette (3), dans laquelle le corps de languette (3)
• s'étend dans une direction d'insertion (2),
• forme une fente de ceinture (4) qui s'étend transversalement à la direction d'insertion (2) et est fournie pour guider une sangle de ceinture à travers celle-ci, et
• a une section de contact (8), dans laquelle la sangle de ceinture (12) repose contre la section de contact (8) au moins dans une position de charge, dans laquelle la section de contact (8) a plusieurs évidements (9) qui dans la position de charge minimisent le glissement de la sangle de ceinture (12) transversalement à la direction d'insertion (2), et
- un élément de blocage (7) agencé de manière mobile dans le corps de languette (3), dans laquelle la sangle de ceinture (12) peut être déplacée à travers la fente de ceinture (4) dans une position de passage à travers non chargée de l'élément de blocage (7) et est au moins inhibée dans sa mobilité au moyen de l'élément de blocage (7) dans la position de charge provoquée par une force de traction introduite dans la sangle de ceinture (12),
**caractérisée en ce que**
dans la position de passage à travers, l'élément de blocage (7) est agencé entre la sangle de ceinture (12) et la section de contact (8) ayant les évidements (9), de sorte que la sangle de ceinture (12) ne repose pas contre les évidements (9) dans la position de passage à travers.

2. Languette de boucle (1) selon la revendication 1, dans laquelle l'élément de blocage (7) a une section de serrage (10) et une section d'actionnement (11), dans laquelle la sangle de ceinture (12) transfère l'élément de blocage (7) de la position de passage à travers à la position de charge en agissant sur la section d'actionnement (11) et la sangle de ceinture (12) est bloquée entre le corps de languette (3) et la section de serrage (10) dans la position de charge.

3. Languette de boucle (1) selon la revendication 2, dans laquelle dans la position de passage à travers, la section d'actionnement (11) est agencée entre la sangle de ceinture (12) et la section de contact (8).

4. Languette de boucle (1) selon la revendication 3, dans laquelle la partie du corps de languette (3) formant la section de contact (8) s'étend à travers l'élément de blocage (7) entre la section de serrage (10) et la section d'actionnement (11) dans la position de charge.

5. Languette de boucle (1) selon l'une des revendications précédentes, **caractérisée en ce que** les évidements (9) délimitent la fente de ceinture (4).

6. Languette de boucle (1) selon l'une des revendications précédentes, dans laquelle la section de contact (8) a au moins trois évidements (9) qui sont agencés les uns à côté des autres et dans laquelle la sangle de ceinture (12) est attirée dans la position de charge.

7. Languette de boucle (1) selon l'une des revendications précédentes, dans laquelle le corps de languette (3) a une plaque de languette (5) métallique et une protection (6) en plastique qui entoure partiellement la plaque de languette (5), dans laquelle le protection (6) a les évidements (9).

8. Languette de boucle (1) selon l'une des revendications précédentes, dans laquelle l'élément de blocage (7) est agencé dans le corps de languette (3) de façon à pouvoir être pivoté ou déplacé linéairement.

9. Languette de boucle (1) selon l'une des revendications précédentes, dans laquelle dans l'état bouclé, la sangle de ceinture (12) est déviée par la languette de boucle (1) d'une manière analogue à une boucle.
